# FASCICULE DE BREVET EUROPEEN

(11) **EP 4 052 985 B1**
(45) Date de publication et mention de la délivrance du brevet: **26.06.2024**
(21) Numéro de dépôt: 22159606.7
(22) Date de dépôt: 02.03.2022
(51) Int. Cl.: B61C 17/04, B61D 27/00, B60K 11/06, B60H 1/00, B60H 1/24, B60H 1/26

(54) **VOITURE DE VÉHICULE FERROVIAIRE COMPRENANT UN SYSTÈME DE VENTILATION**
SCHIENENFAHRZEUGWAGEN, DER EIN BELÜFTUNGSSYSTEM UMFASST
CAR FOR A RAIL VEHICLE COMPRISING A VENTILATION SYSTEM

(30) Priorité: 03.03.2021 FR 2102054
(43) Date de publication de la demande: 07.09.2022
(73) Titulaire: SpeedInnov, 75008 Paris (FR)
(72) Inventeur: COUTY, Matthieu, 17440 Aytré (FR); MARCOS, Xavier, 17138 Puilboreau (FR)
(74) Mandataire: Lavoix

(56) Documents cités:
- EP-A1- 2 889 199
- EP-A1- 3 392 069
- DE-C- 915 230
- GB-A- 566 517
- GB-A- 667 214

## Description

La présente invention concerne une voiture de véhicule ferroviaire.

Une telle voiture comprend par exemple des équipements électriques et électroniques qu'il est nécessaire de refroidir.

A cet effet, il est connu de faire circuler dans la voiture un air frais provenant de l'extérieur de la voiture, qui se réchauffe au contact des divers équipements et qui est rejeté ensuite hors de la voiture.

On connait du document GB 566 517 un véhicule ferroviaire comprenant un système de ventilation.

Classiquement, l'air frais est tiré sur la toiture de la voiture et l'air chaud est rejeté sous le châssis de la voiture, vers les rails.

Toutefois, rejeter l'air chaud en partie basse présente le risque d'introduire des saletés dans la voiture. En effet, la proximité avec le bogie, les disques de frein qui rejettent des poussières de frein et les roues qui peuvent projeter de la boue, entraine un risque que ces diverses saletés passent par la sortie d'air pour remonter dans la voiture de véhicule.

Un but de l'invention est donc de proposer un système de ventilation permettant d'assurer une ventilation efficace tout en limitant le risque d'introduction de saleté dans la voiture.

A cet effet, l'invention a pour objet une voiture de véhicule ferroviaire selon la revendication 1.

Ainsi, l'entrée d'air et la sortie d'air sont disposées sur la toiture de la voiture afin d'éviter tout risque de remontée de saletés dans le compartiment. En outre, la recirculation de l'air chaud sortant est évitée du fait de la séparation de l'entrée d'air et de la sortie d'air selon les directions longitudinale et transversales.

Suivant des modes particuliers de réalisation, le voiture de véhicule ferroviaire comporte l'une ou plusieurs des caractéristiques des revendications 2 à 10.

L'invention sera mieux comprise à la lecture de la description qui suit, donnée uniquement à titre d'exemple, et faite en se référant aux dessins annexés, sur lesquels :
- [Fig 1] la figure 1 est une vue schématique de côté d'un véhicule ferroviaire comprenant une voiture selon l'invention ;
- [Fig 2] la figure 2 est une vue du dessus d'une partie de la toiture de la voiture selon l'invention de la figure 1 ;
- [Fig 3] la figure 3 est une vue en perspective d'une partie du système de ventilation du véhicule selon l'invention de la figure 1.

Dans la description, les termes « horizontal », « vertical », « haut », « bas », « supérieur » et « inférieur » sont définis par rapport à une direction d'élévation d'un véhicule ferroviaire lorsqu'il est disposé sur des rails.

La direction longitudinale X-X' est définie par la direction de circulation du véhicule ferroviaire et la direction transversale Y-Y' est la direction sensiblement perpendiculaire à la direction longitudinale et à la direction d'élévation du véhicule ferroviaire.

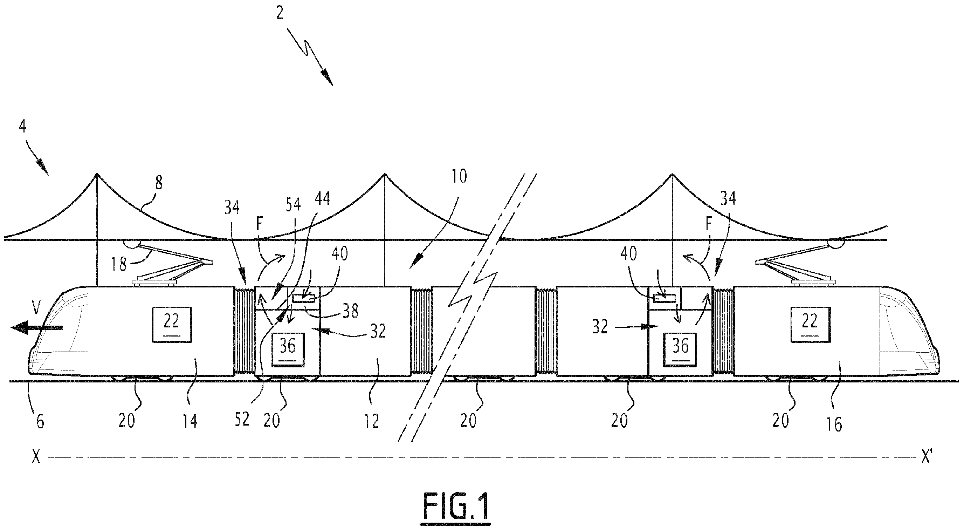

Un système ferroviaire 2 comprenant une infrastructure ferroviaire 4 et un véhicule ferroviaire 10 est illustré sur la figure 1.

L'infrastructure ferroviaire 4 comprend des rails 6 et une caténaire 8.

La caténaire 8 est un dispositif d'alimentation électrique suspendue au-dessus des rails 6 et est constituée d'un ou de deux fils de contact électriquement conducteurs et de câbles porteurs.

Comme visible sur la figure 1, le véhicule ferroviaire 10 comporte au moins une voiture de transport 12 de voyageurs et/ou de marchandises, une voiture de tête 14 et une voiture de queue 16 située à l'extrémité opposée de la voiture de tête 14.

Le véhicule 10 comprend en outre au moins un pantographe 18 disposé sur l'une des voitures 12, 14, 16. Le pantographe 18 est un dispositif articulé configuré pour capter un courant électrique par frottement sur la caténaire 8.

Chaque voiture 12, 14, 16 s'étend suivant la direction longitudinale X-X' et possède deux extrémités longitudinales.

Le véhicule 10 comprend des bogies 20. Chaque bogie 20 supporte une voiture 12, 14, 16 reposant sur ce bogie 20 ou supporte deux voitures 12, 14, 16 voisines reposant par leurs extrémités longitudinales voisines sur ce bogie 20 (on parle alors de « bogie commun »). Ici, comme visible sur la figure 1, chaque voiture 12, 14, 16 est supporté par deux bogies 20 disposés à proximité chacun d'une extrémité longitudinale de la voiture 12, 14, 16.

Chaque bogie 20 comprend des roues pour rouler sur les rails 6 et ainsi permettre le déplacement du véhicule ferroviaire 10 le long des rails 6.

La voiture de tête 14 définit une extrémité de tête du véhicule ferroviaire 10.

La voiture de tête 14 est ici une voiture motrice ou locomotive, configurée pour fournir l'énergie motrice du véhicule 10, i.e. pour pousser ou tracter les voitures 12.

A cet effet, un système de motorisation 22 est embarqué dans la voiture de tête 14. Le système de motorisation 22 comprend notamment un moteur électrique alimenté électriquement par le courant électrique capté par le pantographe 18 et configuré pour convertir l'énergie électrique reçue en énergie mécanique permettant la rotation des roues et ainsi le déplacement du véhicule 10 selon la direction V représentée sur la figure 1.

Dans un mode de réalisation avantageux, le véhicule ferroviaire 10 est configuré pour circuler dans les deux sens. La voiture de queue 16 est alors également une voiture motrice apte à remorquer les autres voitures 12, 14. Un deuxième système de motorisation 22 est alors embarqué dans la voiture de queue 16.

Chaque voiture 12, 14, 16 comprend une caisse 24 portée par le ou les bogies 20 associés et un capot de toiture 26 disposé sur la caisse 24.

La caisse 24 comprend un plancher supporté par le ou les bogies 20, deux faces latérales et un pavillon qui forment la structure de la voiture. Le capot de toiture 26 est posé sur le pavillon de la caisse 24.

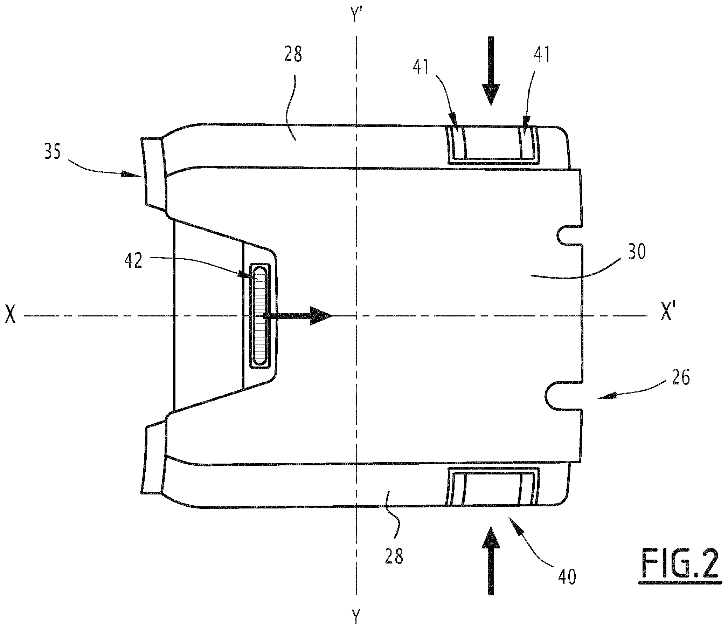

Comme visible sur la figure 2, le capot 26 comprend deux parois latérales 28 et une paroi supérieure 30 disposée entre les deux parois latérales 28.

La caisse 24 et le capot 26 forment une enveloppe externe 31.

En particulier, les faces latérales et le plancher définissent une partie basse de l'enveloppe externe 31 et les parois latérales 28 et la paroi supérieure 30 définissent ensemble une partie supérieure de l'enveloppe externe 31.

La voiture selon l'invention comprend en outre au moins un compartiment 32 à ventiler défini par la caisse 24 et un système de ventilation 34 dudit compartiment 32.

La voiture selon l'invention est notamment une voiture 12 voisine directement d'une voiture motrice, à savoir de la voiture de tête 14 ou de la voiture de queue 16.

En particulier, le compartiment à ventiler 32 est disposée au voisinage de l'une des deux extrémités de la voiture correspondante. Ladite extrémité est propre à être reliée directement à la voiture motrice 14, 16 et est appelé extrémité motrice 35 par la suite.

Comme visible sur la figure 1, le compartiment à ventiler 32 est ici situé au-dessus du bogie 20. Il est ainsi d'autant plus avantageux de ne pas rejeter la sortie d'air chaud en partie basse de la voiture afin de ne pas projeter de l'air chaud sur ce bogie 20.

Le compartiment 32 à ventiler est en particulier un compartiment technique comprenant une pluralité d'équipements électriques et électroniques 36, notamment pour l'alimentation et le pilotage des moteurs.

En variante, le compartiment 32 à ventiler est par exemple compris dans la voiture motrice.

Le système de ventilation 34 est avantageusement disposé à l'intérieur de l'enveloppe externe 31. Ainsi, le système de ventilation 34 ne fait pas saillie hors de cette enveloppe externe 31 et ne perturbe pas l'aérodynamisme et donc les performances du véhicule ferroviaire 10.

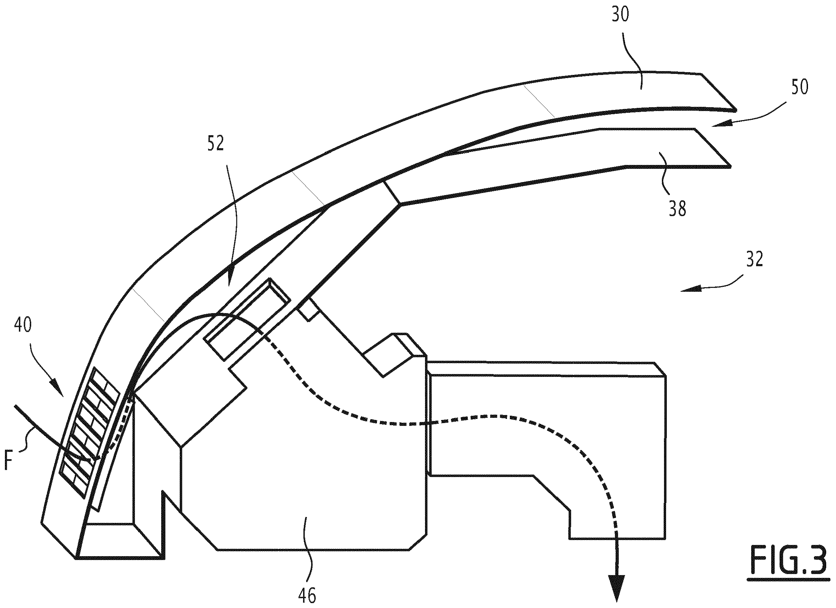

Le système de ventilation 34 définit un conduit d'entrée d'un flux d'air, représenté par des flèches référencées F sur les figures 1 et 3, vers le compartiment 32, entre au moins une entrée d'air 40 ménagée dans l'une des parois latérales 28 et le compartiment 32.

Comme visible sur la figure 2, le système de ventilation 34 comprend avantageusement deux entrées d'air 40 ménagées chacune sur une paroi latérale 28 respective.

Les deux entrées d'air 40 sont notamment symétriques l'une de l'autres par rapport à un plan longitudinal comprenant la direction longitudinale X-X' et la direction d'élévation Z-Z'.

Chaque entrée d'air 40 comprend deux persiennes 41 disposées le long de la direction longitudinale X-X' et orientée chacun dans une direction opposée. Ainsi chaque entrée d'air 40 présente une symétrie par rapport à un plan transversal et est donc configurée pour faire pénétrer le flux d'air dans le conduit d'entrée dans les deux sens de circulation du véhicule 10.

L'air situé à côté de la voiture au niveau des parois latérales 28 étant en surpression par rapport à la pression atmosphérique, l'entrée du flux d'air dans le conduit d'air est facilitée.

En particulier, la pression de l'air au niveau de l'entrée d'air 40 est supérieure à la pression de l'air au niveau d'une sortie d'air 42.

Chaque entrée d'air 40 permet donc de faire entre un débit d'air important tout en limitant les pertes de charge.

Le pantographe 18 étant disposé sur la paroi supérieure 30, la disposition des entrées d'air 40 sur les parois latérales 28 permet d'éviter une éventuelle pollution au carbone due au frottement du pantographe 18 sur la caténaire 8.

Comme visible sur la figure 3, le système de ventilation 34 comprend en outre un système de filtrage 46 pour le filtrage de l'air entre chaque entrée d'air 40 et le compartiment 32 à ventiler.

Le système de filtrage 46 permet d'empêcher des débris ou saletés présentes dans le flux d'air entrant par l'entrée d'air 40 de pénétrer dans le compartiment 32.

Le système de filtrage 46 comprend par exemple une grille disposée dans le conduit d'entrée et/ou au moins un filtre à air disposé entrée l'entrée d'air 40 et le compartiment 32.

Le système de ventilation 34 définit en outre un conduit de sortie s'étendant entre le compartiment 32 et une sortie d'air 42 ménagée dans la paroi supérieure 30.

Les deux entrées d'air 40 sont reliées à la même sortie d'air 42.

La sortie d'air 42 présente une forme oblongue s'étendant selon la direction transversale Y-Y'.

La sortie d'air 42 comprend une grille empêchant des débris de pénétrer dans le conduit de sortie depuis l'extérieur du véhicule 10.

Lorsque le véhicule ferroviaire 10 avance, l'air situé au niveau de la paroi supérieure 30 présente une dépression par rapport à la pression à l'intérieur du compartiment 32, ce qui permet l'extraction du flux d'air par la sortie d'air 42 du fait de l'avancée du véhicule ferroviaire.

Comme visible sur la figure 2, les entrées d'air 40 et la sortie d'air 42 sont séparées selon la direction transversale Y-Y'. La sortie d'air 42 est disposée sensiblement au centre du capot 26 selon la direction transversale Y-Y' et chaque entrée d'air 40 est agencée latéralement selon la direction transversale Y-Y'.

Cette séparation des entrées d'air 40 et de la sortie d'air 42 selon la direction transversale Y-Y' permet d'éviter une recirculation de l'air chaud sortant par la sortie d'air 42 vers les entrées d'air 40 et ainsi une bonne performance du système de ventilation 34.

Comme visible sur la figure 2, l'entrée d'air 40 et la sortie d'air 42 sont disposées à l'écart l'une de l'autre selon la direction longitudinale X-X'.

En particulier, l'entrée d'air 40 et la sortie d'air 42 sont séparées d'une distance selon la direction longitudinale X-X' supérieure à 50 cm.

Comme visible sur la figure 2, la sortie d'air 42 est disposée au voisinage de l'extrémité motrice 35. En particulier, la sortie d'air 42 est disposée à une distance inférieure à 100 cm de l'extrémité motrice 35 selon la direction longitudinale X-X.

Comme visible sur la figure 2, la paroi supérieure 30 définit une ouverture de forme trapézoïdale débouchante au niveau de l'extrémité motrice 35. La sortie d'air 42 est disposée au niveau de la base du trapèze. Cette ouverture renforce la dépression de l'air dans cette zone et favorise l'extraction du flux d'air par la sortie d'air 42.

Chaque entrée d'air 40 est plus éloignée de l'extrémité motrice 35 que la sortie d'air 42 selon la direction longitudinale X-X'.

Cette séparation des entrées d'air 40 et de la sortie d'air 42 selon la direction longitudinale X-X' permet également d'éviter une recirculation de l'air chaud au niveau des entrées d'air 40 et ainsi une bonne performance du système de ventilation 34.

Comme visible sur la figure 1, le système de ventilation 34 est disposé au-dessus du compartiment à ventiler 32 selon la direction d'élévation Z-Z'.

En particulier, le capot de toiture 26 définit un volume interne 50 séparé du compartiment 32 à ventiler par un pavillon 38 de la caisse.

Le capot 26 comprend en outre une cloison de séparation 44 disposée dans le volume interne et séparant le volume interne 50 en un espace d'entrée 52 et un espace de sortie 54.

Chaque entrée d'air 40 débouche dans l'espace d'entrée 52 et chaque sortie d'air 42 débouche dans l'espace de sortie 54.

Le flux d'air frais entrant dans le volume interne 50 est donc séparé du flux d'air chaud ressortant du volume interne 50 et une recirculation du flux d'air chaud est évitée.

Le système de ventilation 34 selon l'invention permet donc un tirage important du flux d'air aux entrées d'air 40 en limitant les pertes de charges.

Le système de ventilation 34 est ainsi propre à fonctionner de manière passive pour la circulation du flux d'air lors du déplacement du véhicule ferroviaire 10.

En effet, le déplacement du véhicule ferroviaire 10 entraine une circulation de l'air autour des voitures et ainsi créé une surpression latérale de l'air au niveau des entrées d'air 40 et une dépression de l'air au niveau de la sortie d'air 42 afin d'entrainer cette circulation.

Le système de ventilation 34 ne nécessite donc pas l'installation d'importants et puissants ventilateurs motorisés pour entrainer le flux d'air à travers le compartiment 32.

La complexité de la ventilation dans le compartiment 32 est donc réduite et ainsi également les couts d'installation et les besoins de maintenance.

## Revendications

1. Voiture (12, 14, 16) de véhicule ferroviaire (10) s'étendant le long d'une direction longitudinale (X-X') parallèle au sens de déplacement du véhicule (10), et comprenant :
- une caisse (24) de véhicule définissant au moins un compartiment (32) à ventiler ;
- un capot de toiture (26) disposé sur la caisse (24), le capot de toiture (26) comprenant deux parois latérales (28) et une paroi supérieure (30) disposée entre les deux parois latérales (28) ; et
- un système de ventilation (34) dudit compartiment définissant
+ un conduit d'entrée d'un flux d'air vers le compartiment (32), entre au moins une entrée d'air (40) ménagée dans l'une des parois latérales (28) et le compartiment (32), et
+ un conduit de sortie s'étendant entre le compartiment (32) et une sortie d'air (42) ménagée dans la paroi supérieure (30),
l'entrée d'air (40) et la sortie d'air (42) étant à l'écart l'une de l'autre selon la direction longitudinale (X-X').

2. Voiture (12, 14, 16) selon la revendication 1, dans laquelle le système de ventilation (34) comprend deux entrées d'air (40) ménagées chacune sur une paroi latérale (28) respective.

3. Voiture (12, 14, 16) selon la revendication 1 ou 2, dans laquelle, l'entrée d'air (40) et la sortie d'air (42) sont séparées d'une distance selon la direction longitudinale (X-X') supérieure à 50 cm, de préférence à 1 mètre.

4. Voiture (12, 14, 16) selon l'une quelconque des revendications précédentes, comprenant deux extrémités selon la direction longitudinale (X-X'), le compartiment (32) à ventiler étant disposée au voisinage de l'une des deux extrémités (35), chaque entrée d'air (40) étant plus éloignée de ladite extrémité (35) que la sortie d'air (42) selon la direction longitudinale (X-X').

5. Voiture (12, 14, 16) selon la revendication 4, dans laquelle ladite extrémité (35) est propre à être reliée directement à une voiture motrice (14, 16) du véhicule ferroviaire (10).

6. Voiture (12, 14, 16) selon l'une quelconque des revendications précédentes, dans laquelle le capot de toiture (26) définit un volume interne séparé du compartiment (32) par un pavillon (38) de la caisse, le capot de toiture (26) comprenant en outre une cloison de séparation (44) disposée dans le volume interne et séparant le volume interne en un espace d'entrée et un espace de sortie, chaque entrée d'air (40) débouchant dans l'espace d'entrée et chaque sortie d'air (42) débouchant dans l'espace de sortie.

7. Voiture (12, 14, 16) selon l'une quelconque des revendications précédentes, dans laquelle le système de ventilation (34) comprend en outre un système de filtrage pour le filtrage de l'air entre chaque entrée d'air (40) et le compartiment (32).

8. Voiture (12, 14, 16) selon l'une quelconque des revendications précédentes, comprenant un bogie (20) supportant la caisse (24), le compartiment (32) à ventiler étant situé au-dessus du bogie (20).

9. Voiture (12, 14, 16) selon l'une quelconque des revendications précédentes, dans laquelle les parois latérales (28) et la paroi supérieure (30) définissent une enveloppe externe, le système de ventilation (34) étant disposé à l'intérieur de l'enveloppe externe.

10. Voiture (12, 14, 16) selon l'une quelconque des revendications précédentes, dans laquelle le système de ventilation (34) est propre à fonctionner de manière passive pour la circulation du flux d'air lors du déplacement du véhicule ferroviaire (10).

## Patentansprüche

1. Wagen (12, 14, 16) eines Schienenfahrzeugs (10), der sich entlang einer Längsrichtung (X-X') parallel zur Fahrtrichtung des Fahrzeugs (10) erstreckt und umfasst:
- einen Wagenkasten (24), der mindestens einen zu belüftenden Raum (32) definiert;
- eine Dachhaube (26), die auf dem Wagenkasten (24) angeordnet ist, wobei die Dachhaube (26) zwei Seitenwände (28) und eine obere Wand (30), die zwischen den beiden Seitenwänden (28) angeordnet ist umfasst; und
- ein Belüftungssystem (34) des Raums, das definiert:
+ einen Kanal für den Eintritt eines Luftstroms in den Raum (32) zwischen mindestens einem Lufteinlass (40), der in einer der Seitenwände (28) ausgebildet ist, und dem Raum (32), und
+ einen Auslasskanal, der sich zwischen dem Raum (32) und einem in der oberen Wand (30) ausgebildeten Luftauslass (42) erstreckt,
wobei der Lufteinlass (40) und der Luftauslass (42) entlang der Längsrichtung (X-X') voneinander beabstandet sind.

2. Wagen (12, 14, 16) nach Anspruch 1, wobei das Belüftungssystem (34) zwei Lufteinlässe (40) umfasst, die jeweils an einer entsprechenden Seitenwand (28) ausgebildet sind.

3. Wagen (12, 14, 16) nach Anspruch 1 oder 2, wobei der Lufteinlass (40) und der Luftauslass (42) in der Längsrichtung (X-X') um einen Abstand von mehr als 50 cm, vorzugsweise 1 Meter, voneinander getrennt sind.

4. Wagen (12, 14, 16) nach einem der vorhergehenden Ansprüche, mit zwei Enden in Längsrichtung (X-X'), wobei der zu belüftende Raum (32) in der Nähe eines der beiden Enden (35) angeordnet ist, wobei jeder Lufteinlass (40) in Längsrichtung (X-X') weiter von dem einen Ende (35) entfernt ist als der Luftauslass (42).

5. Wagen (12, 14, 16) nach Anspruch 4, wobei das Ende (35) geeignet ist, direkt mit einem Triebwagen (14, 16) des Schienenfahrzeugs (10) verbunden zu werden.

6. Wagen (12, 14, 16) nach einem der vorhergehenden Ansprüche, wobei die Dachhaube (26) ein Innenvolumen definiert, das von dem Raum (32) durch ein Dach (38) vom Wagenkasten getrennt ist, wobei die Dachhaube (26) ferner eine Abscheidewand (44) aufweist, die in dem Innenvolumen angeordnet ist und das Innenvolumen in einen Einlassraum und einen Auslassraum unterteilt, wobei jeder Lufteinlass (40) in den Einlassraum mündet und jeder Luftauslass (42) in den Auslassraum mündet.

7. Wagen (12, 14, 16) nach einem der vorhergehenden Ansprüche, wobei das Belüftungssystem (34) außerdem ein Filtersystem zum Filtern der Luft zwischen jedem Lufteinlass (40) und dem Raum (32) umfasst.

8. Wagen (12, 14, 16) nach einem der vorhergehenden Ansprüche, mit einem Drehgestell (20), das den Wagenkasten (24) trägt, wobei der zu belüftende Raum (32) über dem Drehgestell (20) angeordnet ist.

9. Wagen (12, 14, 16) nach einem der vorhergehenden Ansprüche, wobei die Seitenwände (28) und die obere Wand (30) eine Außenhülle definieren, wobei das Belüftungssystem (34) innerhalb der Außenhülle angeordnet ist.

10. Wagen (12, 14, 16) nach einem der vorhergehenden Ansprüche, wobei das Belüftungssystem (34) geeignet ist, passiv für die Zirkulation des Luftstroms während der Fahrt des Schienenfahrzeugs (10) zu arbeiten.

## Claims

1. A carriage (12, 14, 16) for a rail vehicle (10) extending along a longitudinal direction (X-X') parallel to the direction of travel of the vehicle (10), and comprising:
- a vehicle body (24) defining at least one compartment (32) to be ventilated;
- a roof cowling (26) disposed on the body (24), the roof cowling (26) comprising two side walls (28) and a top wall (30) disposed between the two side walls (28); and
- a ventilation system (34) for said compartment defining:
+ an air flow inlet duct to the compartment (32), between at least one air inlet (40) formed in one of the side walls (28) and the compartment (32), and
+ an outlet duct extending between the compartment (32) and an air outlet (42) provided in the top wall (30),
the air inlet (40) and the air outlet (42) being spaced apart in the longitudinal direction (X-X').

2. A carriage (12, 14, 16) according to claim 1, in which the ventilation system (34) comprises two air inlets (40) each provided on a respective side wall (28).

3. A carriage (12, 14, 16) according to claim 1 or 2, in which the air inlet (40) and the air outlet (42) are separated by a distance in the longitudinal direction (X-X') greater than 50 cm, preferably 1 metre.

4. A carriage (12, 14, 16) according to any one of the preceding claims, comprising two ends in the longitudinal direction (X-X'), the compartment (32) to be ventilated being arranged in the vicinity of one of the two ends (35), each air inlet (40) being further from said end (35) than the air outlet (42) in the longitudinal direction (X-X').

5. A carriage (12, 14, 16) according to claim 4, wherein said end (35) is adapted to be connected directly to a locomotive (14, 16) of the rail vehicle (10).

6. A carriage (12, 14, 16) according to any one of the preceding claims, in which the roof cowling (26) defines an internal volume separated from the compartment (32) by a roof (38) of the body, the roof cowling (26) further comprising a separating partition (44) arranged in the internal volume and separating the internal volume into an inlet space and an outlet space, each air inlet (40) opening into the inlet space and each air outlet (42) opening into the outlet space.

7. A carriage (12, 14, 16) according to any one of the preceding claims, wherein the ventilation system (34) further comprises a filtering system for filtering the air between each air inlet (40) and the compartment (32).

8. A carriage (12, 14, 16) according to any of the preceding claims, comprising a bogie (20) supporting the body (24), the compartment (32) to be ventilated being located above the bogie (20).

9. A carriage (12, 14, 16) according to any one of the preceding claims, in which the side walls (28) and the top wall (30) define an outer envelope, the ventilation system (34) being disposed inside the outer envelope.

10. A carriage (12, 14, 16) according to any one of the preceding claims, in which the ventilation system (34) is adapted to operate passively to circulate the air flow when the rail vehicle (10) is in motion.
